Europäisches Patentamt

European Patent Office

Office européen des brevets

(19)

(11) **EP 0 875 090 B1**

(12) **EUROPÄISCHE PATENTSCHRIFT**

(45) Veröffentlichungstag und Bekanntmachung des Hinweises auf die Patenterteilung:
**16.06.1999 Patentblatt 1999/24**

(21) Anmeldenummer: **97906984.6**

(22) Anmeldetag: **08.01.1997**

(51) Int Cl.⁶: **H02J 13/00**

(86) Internationale Anmeldenummer:
**PCT/DE97/00011**

(87) Internationale Veröffentlichungsnummer:
**WO 97/26698 (24.07.1997 Gazette 1997/32)**

(54) **VERBINDUNGSEINRICHTUNG, INSBESONDERE STECKVORRICHTUNG FÜR TT- UND TN-NETZE**

CONNECTOR, IN PARTICULAR A PLUG-IN CONNECTOR FOR TT AND TN NETWORKS

CONNECTEUR, EN PARTICULIER CONNECTEUR A FICHE POUR RESEAUX TT ET TN

(84) Benannte Vertragsstaaten:
**AT CH DE FR GB IT LI**

(30) Priorität: **19.01.1996 DE 19601884**

(43) Veröffentlichungstag der Anmeldung:
**04.11.1998 Patentblatt 1998/45**

(73) Patentinhaber: **SIEMENS AKTIENGESELLSCHAFT**
**80333 München (DE)**

(72) Erfinder:
- **SOLLEDER, Reinhard**
  **D-93138 Lappersdorf (DE)**
- **SCHMID, Reinhard**
  **D-93051 Regensburg (DE)**

(56) Entgegenhaltungen:
EP-A- 0 387 837          WO-A-94/13078
DE-A- 4 425 876         DE-A- 19 507 039
FR-A- 2 704 686

- **RECORD OF THE INDUSTRY APPLICATIONS CONFERENCE (IAS), ORLANDO, OCT. 8 - 12, 1995, Bd. 3, 8.Oktober 1995, INSTITUTE OF ELECTRICAL AND ELECTRONICS ENGINEERS, Seiten 2008-2016, XP000547126 NOVAK T ET AL: "TECHNOLOGICAL INNOVATIONS IN DEEP COAL MINE POWER SYSTEMS"**

**Beschreibung**

Die Erfindung bezieht sich auf eine Verbindungseinrichtung, insbesondere Steckeinrichtung für TT- und TN-Netze, bei der eine spannungsversorgte Überwachungs- und Steuerelektronik in Abhängigkeit von Informationsdaten oder Meßdaten Leiter von einer Versorgungsseite zu einer Verbraucherseite der Verbindungseinrichtung mittels einer Schalteinrichtung durchschaltet bzw. die Durchschaltung aufhebt. Hierbei messen Potentialmeßeinrichtungen auf der Versorgungsseite und bzw. oder auf der Verbraucherseite ständig oder regelmäßig Leiterpotentiale. Bei Unter- oder Überschreiten vorgesehener Grenzwerte wird die Schalteinrichtung betätigt. Die Leiter für die Durchschaltung werden durch eine Einrichtung zur Fehlerstromerfassung überwacht, die die Schalteinrichtung beaufschlagt.

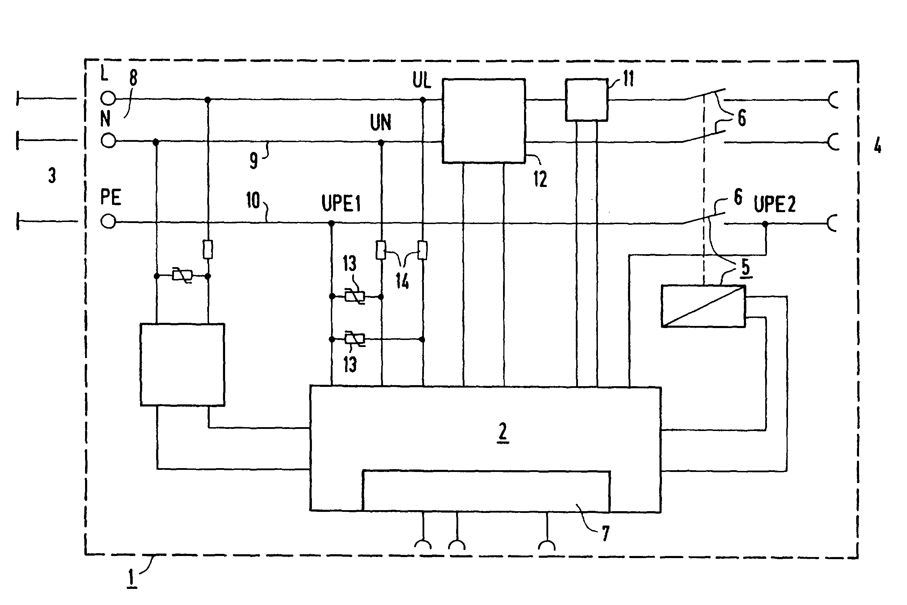

Für den Tiefkohlenbergbau hat man bereits daran gedacht, Anlagen bereitzustellen, die solche Funktionen erfüllen (Record of the industry applications conference (IAS), Orlando, Oct. 8 - 12, 1995, Bd. 3, 08.10.95, IEEE, Seiten 2008 - 2012, XP000547126, Novak T et al: "Technological innovations in deep coal mine power systems", insbesondere Figur 1).

Unter einem TT-Netz versteht man nach VDE 0100 eine Netzform in der Überstrom-, Fehlerstrom- und Fehlerspannunps-Schutzeinrichtungen angewendet werden können. TN-Netze haben die weiteste Verbreitung, wobei hier Überstrom- und Fehlerstrom-Schutzeinrichtungen eingesetzt werden. Hierbei sind alle Körper über einen die Schutzfunktion übernehmenden gesonderten Leiter, dem PE-Leiter, verbunden. Trotz internationaler und nationaler Vorschriften für die Errichtung und Prüfung elektrischer Anlagen kann man in der Praxis mitunter nicht verhindern, daß Anlagen Mängel aufweisen, die zu Unfällen oder Bränden führen können. Durch den Einsatz von Fehlerstromschutzeinrichtungen, besonders mit niedrigen Nennfehlerströmen von 30 mA oder 10 mA, könnte man in den meisten Fällen einen wirksamen Schutz vorsehen. Derartige Schutzeinrichtungen sind jedoch international und auch national gesehen noch nicht für alle Anwendungsgebiete vorgeschrieben.

Nach bisherigen Überlegungen kann man in der Gebäudesystemtechnik entsprechend aufgebauten Steckdosen Ein- und Ausschaltbefehle über Bus zuführen. Derartige Schaltbefehle kann man von Meßergebnissen und Informationsverarbeitung abhängig machen (DE-U-9 312 528). Hierbei können gewisse Funktionen, beispielsweise Strombegrenzung, auch in die Steckdose hinein verlagert werden. Man spricht dann auch von intelligenten Steckdosen. Eine bekannte derartige intelligente Steckdose (DE-A1-4 425 876) besteht aus einer Verbindungseinrichtung, die eine Busschnittstelle aufweist. Als Bus dient hier die Energieleitung.

Nach anderen Überlegungen werden Steckdosen mit sogenannter Kindersicherung versehen, mechanischen Sperren, die den Zugang zu den stromführenden Leitern erst beim Einführen eines geeigneten Steckers ermöglichen.

Der Erfindung liegt die Aufgabe zugrunde, den Gedanken der intelligenten Steckdose weiterzuverfolgen und allgemein eine Verbindungseinrichtung zu entwickeln, die eine Steckdose sein kann, bei der den häufigsten und gefährlichsten Mängeln Rechnung getragen wird und nachgeordnete Einrichtungen und Personen geschützt werden.

Die Lösung der geschilderten Aufgabe erfolgt nach der Erfindung durch eine Verbindungseinrichtung nach Patentanspruch 1. Hierbei messen Potentialmeßeinrichtungen auf der Versorgungsseite und bzw. oder auf der Verbraucherseite ständig oder regelmäßig Leiterpotentiale. Bei Unter- oder Überschreiten vorgegebener Grenzwerte wird die Schalteinrichtung betätigt, und die Durchschaltung aufgehoben, wenn durchgeschaltet war. Wenn ein Verbraucher erst angeschlossen wird, wird in Abhängigkeit von den Meßwerten durchgeschaltet oder nicht durchgeschaltet. Insbesondere beim Schutzleiter sollte das Potential auf der Versorgungsseite und auf der Verbraucherseite der Schaltstrecke gemessen werden. Gestörte oder unterbrochene Schutzleiter werden dabei erfaßt. Die Grenzwerte, die nicht unterschritten werden dürfen, und die Grenzwerte, die nicht überschritten werden dürfen, kann man so festlegen, daß auf richtigen Anschluß, intakte Leiter und darauf geprüft wird, ob der Schutzleiter, auf Erdpotential liegt. Die Leiter für die Durchschaltung werden durch eine Einrichtung zur Fehlerstromerfassung überwacht. Fehlerstrom dient dann auch als Kriterium für vertauschte Leiter, insbesondere für die gefährliche Vertauschung des Außenleiters, L-Leiters, und des Schutzleiters, PE-Leiters.

Es ist hierbei wesentlich, daß die Überwachungs- und Steuerelektronik dafür ausgelegt ist, bei einer bestimmten Anzahl kurzzeitiger Aufhebungen der Durchschaltung in einem vorbestimmten Zeitraum eine Meldung abzugeben. Hierdurch kann man schlechte Kontaktverbindungen, sogenannten Wackelkontakt erkennen.

Informationsdaten und bzw. oder Befehlsdaten stehen an einer Busschnittstelle der Verbindungseinrichtung an.

Insbesondere können die Grenzwerte für die Meßergebnisse der potentialen Meßeinrichtung der Beziehung nach Anspruch 2 genügen. Schlechte Kontaktverbindung und sogenannter Wackelkontakt kann durch eine Auslegung der Verbindungseinrichtung gemäß Anspruch 3 erkannt werden. Insbesondere ist eine Auslegung nach Anspruch 4 günstig.

Der Schutzleiter, PE-Leiter, kann vorteilhaft durch eine Auslegung der Verbindungseinrichtung gemäß Anspruch 5 überprüft werden, wobei unzulängliche leitende Verbindung und der besonders gefährliche Schutzleiterbruch erkannt werden können.

Nach einer Weiterbildung wird die Fehlerstromschutzeinrichtung der Verbindungseinrichtung gegen Fehlauslösungen durch einen Überspannungsschutz nach Anspruch 6 gesichert. Der Überspannungsschutz schützt zugleich das Netzteil und die Elektronik in herkömmlicher Weise gegenüber Spannungen. Die spannungsabhängigen Widerstände des Überspannungsschutzes nach Anspruch 6 können ihrerseits durch Vorwiderstände geschützt werden.

Die Verbindungseinrichtung, die mit schraubenlosen Klemmen, mit Schraubklemmen oder mit Steckvorrichtungen arbeiten kann, läßt sich mit ihren Funktionen auch in einem ortsfesten Verbrauchergerät ausbilden. Hierdurch wird ein fest angeschlossenes Betriebsmittel oder allgemein ein Verbraucher einschließlich der Zuleitungen überprüft und gegen sonst unbemerkte und gegebenenfalls gefährliche Schäden dadurch geschützt, daß die Verbindungseinrichtung die Durchschaltung nicht herstellt oder diese aufhebt, wenn Unregelmäßigkeiten erkannt werden.

Die Erfindung soll nun anhand eines in der Zeichnung grob schematisch wiedergegebenen Ausführungsbeispiels veranschaulicht werden. Wiedergegeben ist eine intelligente Steckdose in einem 1+N-System.

Die Verbindungseinrichtung 1 weist eine von der Netzspannung versorgte Überwachungs- und Steuerelektronik 2 auf, die eine Versorgungsseite 3 zu einer Verbraucherseite 4 mittels einer Schalteinrichtung 5 durchschaltet bzw. die Durchschaltung aufhebt, indem Schaltkontakte geöffnet werden. Die Schaltkontakte 6 werden in Abhängigkeit von Informationsdaten über eine Bus-Schnittstelle 7 und in Abhängigkeit von Meßdaten von der Überwachungs- und Steuerelektronik 2 betätigt. Die Meßdaten werden von Potentialen der Versorgungsseite 3 und/oder von Potentialen der Verbraucherseite 4 sowie vom Stromfluß in besonderer Weise abgeleitet.

Potentialmeßeinrichtungen auf der Versorgungsseite 3 und bzw. oder auf der Verbraucherseite 4 messen ständig oder regelmäßig Leiterpotentiale, nämlich im Ausführungsbeispiel die Spannung UL des Außenleiters 8, früher Phasenleiter genannt, die Spannung UN des Neutralleiters 9, im Ausführungsbeispiel jeweils auf der Versorgungsseite 3. Weiter wird die Spannung UPE1 des Schutzleiters, PE, 10 auf der Versorgungsseite sowie die Spannung UPE2 des Schutzleiters auf der Verbraucherseite 4 gemessen. Die Messung der Potentiale in Form von Potentialdifferenzen benötigt kein Bezugspotential und beispielsweise wie beim Einsatz von Trennverstärkern in der Meßtechnik erfolgen. Die Potentialmeßeinrichtung ist von Beschaltungselementen abgesehen im wesentlichen in der Überwachungs- und Steuerelektronik 2 integriert. Diese prüft die Potentiale UL, UN, UPE 1 und UPE 2 auf der Versorgungsseite bzw. der Verbraucherseite darauf, ob vorgegebene Grenzwerte unter- oder überschritten werden. Im zulässigen Bereich erfolgt die Durchschaltung durch die Schalteinrichtung 5, im nicht zulässigen Bereich, von dem Gefährdungen ausgehen können, unterbleibt die Durchschaltung oder sie wird aufgehoben, je nach Betriebszustand der Verbindungseinrichtung 1.

Die allpolige Durchschaltung erfolgt insbesondere nur, wenn die Überwachungs- und Steuerelektronik 2 bezüglich der Versorgungsseite 3, also des netzseitigen Anschlusses, keinen Fehler oder Mangel festgestellt hat. Bei einem Fehler oder Mangel schaltet die Überwachungs- und Steuerelektronik allpolig ab.

Beispielsweise in der Ausführung als Steckdose, kann die Verbindungseinrichtung darüber hinaus so ausgelegt sein, daß auch die von einem Verbraucher entnommene Stromstärke durch einen Stromsensor 11 gemessen wird und über die Busschnittstelle 7 an einen Bus zur weiteren Verarbeitung in einer Teilnehmerstation abgegeben wird. Entsprechend kann auch der Betriebszustand eines angeschlossenen Verbrauchers als Ein oder Aus weitergegeben werden. Andererseits kann auch der Zustand Ein oder Aus der Verbindungseinrichtung selbst weitergegeben werden oder als Befehl über Bus empfangen werden. Eine derartige Verbindungseinrichtung kann für Loadmanagement eingesetzt werden.

Wesentlich ist weiter, daß die Überwachungs- und Steuerelektronik dafür ausgelegt ist, bei einer bestimmten Anzahl kurzzeitiger Aufhebungen oder Durchschaltungen in einem vorbestimmten Zeitraum eine Meldung abzugeben. Dadurch können schlechte Kontaktverbindungen, wie Wackelkontakt, erkannt werden und dieser unsichere Betriebszustand zum Abschalten herangezogen werden. Leiter 8 und 9 für die Durchschaltung sind durch eine Einrichtung 12 zur Fehlerstromerfassung überwacht. Fehlerstrom wird bei derart überwachten Leitern auch als Kriterium für vertauschte Leiter verwendet. Im Ausführungsbeispiel wird der Außenleiter 8 und der Schutzleiter 10 durch die Einrichtung 12 zur Fehlerstromerfassung auf Vertauschen überprüft. Außerdem der Neutralleiter 9 und der Schutzleiter 10.

Allgemein können durch die Verbindungseinrichtung 1 Informationsdaten an die Busschnittstelle 7 abgegeben werden und Befehlsdaten über die Busschnittstelle von einem Bus und befehlsgebende Teilnehmerstationen erhalten werden.

Die Grenzwerte für die Meßergebnisse der Potentialmeßeinrichtung kann insbesondere der Beziehung genügen:

$$0,01V < (UN-UPE1) < (UL-UN) \times 0,1$$

oder

$$0,01 V < (UN-UPE1) < 50 V,$$

wobei UL die Spannung eines Außenleiters, bzw. Phasenleiters nach alter Bezeichnung, UN die Spannung des Neutralleiters und UPE1 die Spannung des Schutzleiters gegen Bezugspotential auf der Versorgungsseite wiedergibt.

Die Überwachungs- und Steuerelektronik 2 kann insbesondere dafür ausgelegt sein, bei einer bestimmten Anzahl von Unterbrechungen während einer vergleichsweise kurzen Zeitdauer innerhalb eines bestimmten längeren Zeitraums eine Meldung abzugeben. Die Überwachungs- und Steuerelektronik 2 kann insbesondere dafür ausgelegt sein, bei drei Unterbrechungen während einer Zeitdauer, die kleiner als 1 Sekunde ist, innerhalb eines Zeitraums von 10 Minuten, eine Meldung abzugeben. Dadurch können unsichere Kontakte und Wackelkontakte praxisgerecht erkannt werden.

Die Grenzwerte für die Meßergebnisse hinsichtlich der Schaltstrecke für den PE-Leiter 10 können insbesondere der Beziehung genügen

$$0{,}01V < (UN\text{-}UPE2) < (UL\text{-}UN) \times 0{,}1$$

oder

$$0{,}01V < (UN\text{-}UPE2) < 50\ V,$$

wobei UPE2 die Spannung des Schutzleiters auf der Verbraucherseite 4 im Schaltkontakt 6 ist, also sein verbraucherseitiges Potential ist.

Es ist besonders vorteilhaft, wenn zumindest auf der Versorgungsseite 3 bei der Potentialmeßeinrichtung vom Potential des Außenleiters 8 bzw. mehrerer Außenleiter, sowie vom Potential des Neutralleiters 9 jeweils über einen spannungsabhängigen Widerstand 13 eine Verbindung zum Potential des - Schutzleiters 10 hergestellt ist, wobei der Widerstand mit steigender Spannung abnimmt. Dadurch wird die Fehlerstrommeßeinrichtung 12 gegen Fehlauslösungen bei Überspannungen geschützt. Ebenso werden in an sich bekannter Weise Netzteil und Elektronik geschützt. Es ist vorteilhaft, den spannungsabhängigen Widerständen 13 jeweils einen Vorwiderstand 14 vorzuschalten, um die spannungsabhängigen Widerstände 13 ihrerseits zu schützen.

Die geschilderte Verbindungseinrichtung 1 kann an den verschiedenartigsten Stellen und in den verschiedenartigsten Ausführungen realisiert sein. So kann sie in einem ortsfesten Verbrauchergerät mit einem Anschlußstecker ausgebildet sein. Hierdurch wird geprüft, ob der Verbraucher bei seinem Anschluß einschließlich der Zuleitungen in ordnungsgemäßem Zustand ist.

**Patentansprüche**

1. Verbindungseinrichtung (1), insbesondere Steckvorrichtung für TT- und TN-Netze, bei der eine spannungsversorgte Überwachungs- und Steuerelektronik (2) in Abhängigkeit von Informationsdaten oder Meßdaten Leiter (8,9,10) von einer Versorgungsseite (3) zu einer Verbraucherseite (4) der Verbindungseinrichtung mittels einer Schalteinrichtung (5) durchschaltet bzw. die Durchschaltung aufhebt, wobei

   Potentialmeßeinrichtungen auf der Versorgungsseite (3) und bzw. oder auf der Verbraucherseite (4) ständig oder regelmäßig Leiterpotentiale messen und bei Unter- oder Überschreiten vorgesehener Grenzwerte die Schalteinrichtung (5) betätigt wird, und wobei Leiter (8, 9) für die Durchschaltung durch eine Einrichtung (12) zur Fehlerstromerfassung überwacht werden, die die Schalteinrichtung (5) beaufschlagt,

   **dadurch gekennzeichnet,**

   daß die Überwachungs- und Steuerelektronik (2) dafür ausgelegt ist, bei einer vorbestimmten Anzahl mehrerer kurzzeitiger Aufhebungen oder Durchschaltungen in einem vorbestimmten zur Erfassung von Wackelkontakten angemessenen Zeitraum eine Meldung abzugeben, wobei Informationsdaten und bzw. oder Befehlsdaten an einer Busschnittstelle (7) anstehen.

2. Verbindungseinrichtung nach Anspruch 1,
   **dadurch gekennzeichnet,**
   daß die Grenzwerte für die Meßergebnisse der Potentialmeßeinrichtung für die Durchschaltung und deren Aufrechterhaltung der Beziehung genügen:

   $$0{,}01V < (UN\text{-}UPE1) < (UL\text{-}UN) \times 0{,}1$$

   oder

   $$0{,}01\ V < (UN\text{-}UPE1) < 50\ V,$$

   wobei UL die Spannung eines Außenleiters, UN die Spannung des Neutralleiters und UPE1 die Spannung des Schutzleiters gegen Bezugspotential versorgungsseitig zur Schaltstrecke wiedergibt.

3. Verbindungseinrichtung nach Anspruch 1 oder 2,
   **dadurch gekennzeichnet,**
   daß die Überwachungs- und Steuerelektronik (2) dafür ausgelegt ist, bei einer vorbestimmten, Wackelkontakten entsprechenden Anzahl von Unterbrechungen während einer vergleichsweise kurzen Zeitdauer innerhalb eines vorbestimmten längeren Zeitraums eine Meldung abzugeben.

4. Verbindungseinrichtung nach Amspruch 1, **dadurch gekennzeichnet,** daß die Überwachungs- und Steuerelektronik (2) dafür ausgelegt ist, bei 3 Unterbrechungen während einer Zeitdauer, die kleiner als 1 Sekunde ist, innerhalb eines Zeitraums von 10 Minuten, eine Meldung abzugeben.

5. Verbindungseinrichtung nach einem der Ansprüche 1 bis 4, **dadurch gekennzeichnet,** daß die Grenzwerte für die Meßergebnisse bezüglich Abschaltung oder/und Meldung hinsichtlich der Schaltstrecke für den PE-Leiter (10) der Beziehung genügen:

$$0{,}01\ V < (UN{-}UPE2) < (UL{-}UN) \times 0{,}1$$

oder

$$0{,}01\ V < (UN{-}UPE2) < 50\ V,$$

wobei UPE2 die Spannung des Schutzleiters auf der Verbraucherseite des Schaltkontakts (6) gegen Bezugspotential, also sein verbraucherseitiges Potential, ist.

6. Verbindungseinrichtung nach einem der Ansprüche 1 bis 5, **dadurch gekennzeichnet,** daß zumindest auf der Versorgungsseite (3) bei der Potentialmeßeinrichtung vom Potential des Außenleiters (8) bzw. der Außenleiter sowie vom Potential des Neutralleiters (9) jeweils über einen spannungsabhängigen Widerstand (13) eine Verbindung zum Potential des Schutzleiters (10) hergestellt ist, wobei der widerstand mit steigender Spannung abnimmt.

7. Verbindungseinrichtung nach Anspruch 6, **dadurch gekennzeichnet,** daß den spannungsabhängigen Widerständen (13) jeweils ein Vorwiderstand (14) vorgeschaltet ist.

8. Verbindungseinrichtunp nach einem der Ansprüche 1 bis 7, **dadurch gekennzeichnet,** daß sie in einem ortsfesten Verbrauchergerät ausgebildet ist.

## Claims

1. Connecting device (1), in particular a plug-in arrangement for TT and TN systems, in which a monitoring and control electronics unit (2) supplied with voltage connects conductors (8, 9, 10) through from a supply side (3) to a load side (4) of the connecting device by means of a switching device (5), or cancels the through-connection, as a function of information data or measurement data, wherein potential-measuring devices continuously or regularly measure conductor potentials on the supply side (3) and/or on the load side (4), and when there is a fall below given limiting values or given limiting values are exceeded, the switching device (5) is actuated, and wherein conductors (8, 9) for the through-connection are monitored by means of a device (12) for fault-current detection that acts upon the switching device (5), characterised in that the monitoring and control electronics unit (2) is designed to deliver a message in the case of a predetermined number of several short-time cancellations or through-connections within a predetermined period of time appropriate for the detection of loose contacts, with information data and/or command data being available at a bus interface (7).

2. Connecting device according to claim 1, characterised in that the limiting values for the measurement results of the potential-measuring device for the through-connection and the maintenance thereof satisfy the relationship:

$$0{,}01\ V < (UN{-}UPE1) < (UL{-}UN) \times 0.1$$

or

$$0{,}01\ V < (UN{-}UPE1) < 50\ V,$$

where UL represents the voltage of an outer conductor, UN the voltage of the neutral conductor and UPE1 the voltage of the protective conductor with respect to reference potential on the supply side relative to the contact-break distance.

3. Connecting device according to claim 1 or 2, characterised in that the monitoring and control electronics unit (2) is designed to deliver a message in the case of a predetermined number of interruptions, corresponding to loose contacts, during a comparatively short length of time within a predetermined longer period of time.

4. Connecting device according to claim 3, characterised in that the monitoring and control electronics unit (2) is designed to deliver a message in the case of three interruptions during a length of time which is shorter than 1 second within a period of time of 10 minutes.

5. Connecting device according to one of claims 1 to 4, characterised in that the limiting values for the measurement results with regard to switching off and/or the message with respect to the contact-break distance for the PE conductor (10) satisfy the relationship:

$$0.01\ V < (UN-UPE2) < (UL-UN) \times 0.1$$

or

$$0.01\ V < (UN-UPE2) < 50\ V,$$

where UPE2 is the voltage of the protective conductor on the load side of the switching contact (6) with respect to reference potential, that is, its load-side potential.

6. Connecting device according to one of claims 1 to 5, characterised in that at least on the supply side (3) in the potential-measuring device a connection with the potential of the protective conductor (10) is established from the potential of the outer conductor (8) or the outer conductors and also from the potential of the neutral conductor (9) by way of a respective voltage-dependent resistor (13), with the resistance decreasing with increasing voltage.

7. Connecting device according to claim 6, characterised in that a respective series resistor (14) is connected upstream of the voltage-dependent resistors (13).

8. Connecting device according to one of claims 1 to 7, characterised in that it is constructed in a stationary load apparatus.

## Revendications

1. Dispositif connecteur (1), notamment connecteur à fiche pour des réseaux TT et TN, dans lequel une électronique de contrôle et de commande (2) alimentée en tension connecte au moyen d'un dispositif commutateur (5), en fonction de données d'informations ou de données de mesures, des conducteurs (8, 9, 10) d'un côté alimentation (3) à un côté consommateur (4) du dispositif connecteur ou supprime la connexion,

    des dispositifs de mesure de potentiel mesurant constamment ou régulièrement des potentiels de conducteurs du côté alimentation (3) et/ou du côté consommateur (4) et le dispositif commutateur (5) étant actionné si des valeurs limites prévues sont dépassées dans un sens ou dans l'autre

    des conducteurs (8, 9) pour la connexion étant surveillés par un dispositif (12) qui est destiné à la détection de courant de défaut et qui alimente le dispositif commutateur (5),

    caractérisé par le fait que

    l'électronique de contrôle et de commande (2) est conçue pour délivrer un signal s'il y a un nombre prédéterminé de brèves connexions ou interruptions dans un intervalle de temps prédéterminé dimensionné pour détecter des contacts intermittents,
des données d'informations et/ou des données d'instructions étant présentes à une interface de bus (7).

2. Dispositif connecteur selon la revendication 1, caractérisé par le fait que
les valeurs limites pour les résultats de mesures du dispositif de mesure de potentiel pour la connexion et son maintien satisfont la relation :

$$0.01\ V < (UN - UPE1) < (UL - UN) \times 0.1$$

ou

$$0.01\ V < (UN - UPE1) < 50\ V$$

UL étant la tension d'un conducteur extérieur, UN la tension du conducteur neutre et UPE1 la tension du conducteur de protection par rapport au potentiel de référence du côté de l'alimentation pour la voie de commutation.

3. Dispositif connecteur selon la revendication 1 ou 2, caractérisé par le fait que

    l'électronique de contrôle et de commande (2) est conçue pour délivrer un signal s'il y a un nombre prédéterminé, correspondant à des contacts intermittents, d'interruptions pendant une durée comparativement courte à l'intérieur d'un intervalle de temps plus long prédéterminé.

4. Dispositif connecteur selon la revendication 3, caractérisé par le fait que

    l'électronique de contrôle et de commande (2) est conçue pour délivrer un signal s'il y a 3 interruptions pendant une durée inférieure à 1 seconde à l'intérieur d'un intervalle de temps de 10 minutes.

5. Dispositif connecteur selon l'une des revendications 1 à 4,
    caractérisé par le fait que
    les valeurs limites pour les résultats de mesures pour une coupure et/ou un signal vis-à-vis de la voie de commutation pour le conducteur PE (10) satisfont la relation :

$$0,01\ V < (UN - UPE2) < (UL - UN)\ x\ 0,1$$

ou

$$0,01\ V < (UN - UPE2) < 50\ V$$

UPE2 étant la tension du conducteur de protection du côté consommateur du contact de commutation (6) par rapport au potentiel de référence, c'est-à-dire son potentiel côté consommateur.

6. Dispositif connecteur selon l'une des revendications 1 à 5,
    caractérisé par le fait que

    on établit, au moins du côté alimentation (3) pour le dispositif de mesure du potentiel du conducteur extérieur (8) ou des conducteurs extérieurs ainsi que du potentiel du conducteur neutre (9), respectivement par l'intermédiaire d'une résistance (13) dépendante de la tension, une liaison vers le potentiel du conducteur de protection (10), la résistance diminuant lorsque la tension augmente.

7. Dispositif connecteur selon la revendication 6,
    caractérisé par le fait que

    une résistance série (14) est branchée du côté amont de chaque résistance (13) dépendante de la tension.

8. Dispositif connecteur selon l'une des revendications 1 à 7,
    caractérisé par le fait que

    il est installé dans un appareil consommateur fixe.